# EUROPÄISCHE PATENTSCHRIFT

(11) **EP 0 537 740 B1**
(45) Veröffentlichungstag und Bekanntmachung des Hinweises auf die Patenterteilung: **04.01.1995**
(21) Anmeldenummer: 92117627.7
(22) Anmeldetag: 15.10.1992
(51) Int. Cl.: C07F 7/12

(54) **Verfahren zur Herstellung von Methylchlorsilanen**
Process for the preparation of methylchlorosilanes
Procédé de préparation de méthylchlorosilanes

(30) Priorität: 17.10.1991 DE 4134422
(43) Veröffentlichungstag der Anmeldung: 21.04.1993
(73) Patentinhaber: WACKER-CHEMIE GMBH, D-81737 München (DE)
(72) Erfinder: Kalchauer, Wilfried, Dr., W-8263 Burghausen (DE); Pachaly, Bernd, Dr., W-8263 Burghausen (DE)

(56) Entgegenhaltungen:
- EP-A- 0 363 584
- DE-A- 2 950 402
- DE-A- 3 208 829
- FR-A- 1 093 399
- FR-A- 1 447 304
- FR-A- 1 507 272
- FR-A- 2 163 579
- FR-A- 2 415 113

## Beschreibung

Die Erfindung betrifft ein Verfahren zur Herstellung von Methylchlorsilanen durch Spaltung von Methylchlordisilanen.

Methylchlorsilane werden beim Rochow-Prozeß durch Umsetzung von Methylchlorid mit elementarem Silicium erhalten. Als Nebenprodukt fallen dabei Disilane an.

In US-A 3,772,347 (ausgegeben 13. November 1973, W.H. Atwell et al., Dow Corning Corporation) ist ein Verfahren zur Spaltung von Disilanen beschrieben, das in einer Spaltung der Si-Si-Bindung in dem Disilan unter Bildung einer Silicium-Kohlenstoff-Bindung und einer Silicium-Chlor-Bindung gemäß folgendem Reaktionsschema besteht:

≡SiSi≡ + R'Cl ---> ≡SiR' + ≡SiCl

R' steht dabei für einen Alkylrest oder für Wasserstoff. Als Katalysatoren werden Übergangsmetallkomplexe, wie Phosphinpalladiumkomplexe, oder feinverteiltes Platin oder Palladium, das sich auch auf einem Träger, wie Kohle, befinden kann, verwendet.

Gemäß Beispiel 3 der US-A 3,772,347 wird eine Methylchlordisilanmischung mit Chlorwasserstoff in Gegenwart eines Phosphinpalladiumkomplexes umgesetzt. Ca. 25 Gew.-% der erhaltenen Methylchlormonosilane enthalten Si-gebundenen Wasserstoff.

Es bestand die Aufgabe ein Verfahren zur Spaltung von Methylchlordisilanen bereitzustellen, bei dem Methylchlormonosilane, die frei von Si-gebundenem Wasserstoff sind, erhalten werden.

Gegenstand der Erfindung ist ein Verfahren zur Herstellung von Methylchlorsilanen durch Umsetzung von Methylchlordisilanen mit Chlorwasserstoff in Gegenwart eines Metalls aus der VIII. Nebengruppe des Periodensystems als Katalysator.

Die Vorteile des erfindungsgemäßen Verfahren sind, daß die erhaltenen Monosilane die Zielprodukte der Silandirektsynthese sind, d.h. die beim Rochow-Prozeß als Nebenprodukt anfallenden Disilane werden in technisch nutzbare Monosilane umgewandelt, das Verbrennen der Disilane entfällt, was zum Umweltschutz beiträgt, daß für das Verfahren nur kurze Reaktionszeiten benötigt werden, daß die gewünschten Monosilane in hohen Ausbeuten erhalten werden und daß der Katalysator in fester Form vorliegt, d.h. die Umsetzung heterogen katalysiert wird, was eine leichte Abtrennung des Katalysators von den Reaktionsrückständen sowie den Einsatz von mit Katalysator gefüllten Destillationsreaktionskolonnen ermöglicht.

Beispiele für Metalle der VIII. Nebengruppe des Periodensystems sind Platin, Palladium, Rhodium und Ruthenium, wobei Palladium ein bevorzugtes Bespiel ist.

Die Metalle werden vorzugsweise in feinverteilter Form, wobei sie sich bevorzugt auf Trägern befinden, eingesetzt.

Beispiele für Träger sind Aktivkohle, Kohle, anorganische Oxide, wie Siliciumdioxid, Aluminiumoxid, Titandioxid, Zirkondioxid und Silicate; Carbonate, wie Calciumcarbonat und Bariumcarbonat; Sulfate, wie Bariumsulfat; und organische Träger, wie mit Siliciumdioxid gefüllte Polyethylenimine; wobei Kohle und Aktivkohle bevorzugte Beispiele sind.

Derartige Katalysatoren, bei denen sich die feinverteilten Metalle auf Trägern befinden, sind käuflich erwerbbar, wie z.B. Palladium auf Bariumsulfat (5 Gew.-% Palladium / 95 Gew.-% Bariumsulfat) bei Strem Chemicals GmbH oder z.B. Platin auf Aktivkohle (3 Gew.-% Platin / 97 Gew.-% Aktivkohle) bei Johnson Matthey GmbH.

Die Konzentration der Metalle auf den Trägern beträgt vorzugsweise 0,8 bis 10 Gew.-%, bezogen auf das Gesamtgewicht des Katalysators, wie sie üblicherweise bei den käuflich erwerblichen Produkten vorliegt; es können aber auch höhere oder niedrigere Konzentrationen verwendet werden.

Bei dem erfindungsgemäßen Verfahren werden als Methyl disilane solche der allgemeinen Formel

(CH₃)ₙSi₂Cl₆₋ₙ ,

wobei n eine ganze Zahl von 2 bis 6 bedeutet, eingesetzt.

Beispiele für Methylchlordisilane sind solche der Formel

MeCl₂SiSiCl₂Me

Me₂ClSiSiCl₂Me

Me₂ClSiSiClMe₂

Me₃SiSiCl₂Me

Me₃SiSiClMe₂ und

Me₃SiSiMe₃ ,

wobei Me einen Methylrest bedeutet.

Die Methylchlordisilane fallen bei der Silandirektsynthese aus Methylchlorid und elementarem Silicium, dem Rochow-Prozeß, als Nebenprodukt im hochsiedenden Rückstand an und können daraus isoliert und bei dem erfindungsgemäßen Verfahren eingesetzt werden.

Es kann eine Art von Methylchlordisilan oder ein Gemisch aus mindestens zwei Methylchlordisilanen eingesetzt werden. Die Methylchlordisilane bzw. deren Gemische können in flüssiger Form oder in gasförmiger Form eingesetzt werden.

Bei dem erfindungsgemäßen Verfahren wird Chlorwasserstoff vorzugsweise in Mengen von mindestens 2 Mol, bevorzugt 2,5 bis 10 Mol, jeweils je Mol eingesetztes Methylchlordisilan eingesetzt.

Bei dem erfindungsgemäßen Verfahren werden vorzugsweise Methylchlorsilane der allgemeinen Formel

(CH₃)ₘSiCl₄₋ₘ ,

wobei m 1, 2 oder 3 bedeutet, hergestellt.

Beispiele für Methylchlorsilane sind solche der Formel

MeSiCl₃

Me₂SiCl₂ und

Me₃SiCl,

wobei Me einen Methylrest bedeutet.

Das erfindungsgemäße Verfahren wird vorzugsweise unter Inertgasatmosphäre, wie Stickstoff-, Argon- oder Heliumatmosphäre, bevorzugt unter Stickstoff- oder Argonatmosphäre, durchgeführt. Das erfindungsgemäße Verfahren wird bei einer Temperatur von vorzugsweise 50 bis 250°C, bevorzugt 100 bis 200°C, und vorzugsweise beim Druck der umgebenden Atmosphäre durchgeführt. Es können aber auch höhere oder niedrigere Drücke angewendet werden.

Bei dem erfindungsgemäßen Verfahren können inerte organische Lösungsmittel, wie Toluol, Xylol, Octan, Dekan oder Petrolether verschiedener Siedefraktionen, verwendet werden, obwohl deren Mitverwendung nicht bevorzugt ist.

Der erfindungsgemäß verwendete Katalysator kann in der Flüssigphase oder in der Gasphase zum Einsatz kommen.

Beim in der Flüssigphase durchgeführten Verfahren wird der Katalysator vorzugsweise in Mengen von weniger als 0,1 Mol%, bevorzugt in Mengen von 0,01 bis 0,05 Mol%, jeweils bezogen auf das elementare Metall und die gesamte Molmenge der eingesetzten flüssigen Methylchlordisilane, eingesetzt.

Der Katalysator kann von den hochsiedenden Rückständen leicht beispielsweise durch Filtration abgetrennt werden.

Beim in der Gasphase durchgeführten Verfahren kann eine mit Katalysatormaterial, wobei das Katalysatormetall sich auf einem Träger befindet, gefüllte Destillationsreaktionskolonne verwendet werden. Diese Reaktionsführung hat den Vorteil, daß eine Abtrennung des Katalysators von den hochsiedenden Reaktionsrückständen nicht mehr erforderlich ist und die bei der Umsetzung gebildeten Methylchlorsilane beim Durchgang durch die Kolonne auch gleich destillativ gereinigt werden.

Das erfindungsgemäße Verfahren kann absatzweise, halbkontinuierlich oder vollkontinuierlich durchgeführt werden.

### Beispiel 1:

In einen Dreihalskolben mit aufgesetztem Thermometer, Gaseinleitungsrohr und einer Spiegelglaskolonne mit aufgesetztem Destillationskopf wurden unter Stickstoffatmosphäre
310 g eines Methylchlordisilangemisches bestehend aus
1,0 Gew.-% Pentamethylchlordisilan,
5,2 Gew.-% 1,1,1,2-Tetramethyldichlordisilan,
87,5 Gew.-% 1,1,2,2-Tetramethyldichlordisilan,
2,3 Gew.-% 1,1,2-Trimethyltrichlordisilan und
3,4 Gew.-% 1,2-Dimethyltetrachlordisilan
und 0,03 Mol% Palladium, bezogen auf die gesamte Molmenge des eingesetzten Disilans, in Form von 1,06 g Palladium auf Aktivkohle (5 Gew.-% Palladium / 95 Gew.-% Aktivkohle) vorgelegt. Die Mischung wurde unter Rühren auf 140°C erwärmt und Chlorwasserstoff wurde in einer Menge von ca. 25 Litern je Stunde in die Mischung eingeleitet. Die Reaktionsprodukte wurden aus dem Reaktionskolben über die Kolonne abdestilliert, kondensiert und gaschromatographisch sowie mittels ¹H-NMR-Spektroskopie analysiert. Nach 4,5 Stunden Reaktionszeit wurden 271 g Destillat mit folgender Zusammensetzung erhalten:
95,6 Gew.-% Dimethyldichlorsilan (Me₂SiCl₂),
2,3 Gew.-% Methyltrichlorsilan (MeSiCl₃) und
1,3 Gew.-% Trimethylchlorsilan (Me₃SiCl).

### Vergleichsversuch 1:

Die Arbeitsweise von Beispiel 1 wurde wiederholt mit der Abänderung, daß 0,03 Mol% Palladium (bezogen auf die gesamte Molmenge des eingesetzten Disilangemisches) in Form von 0,053 g Tetrakistriphenylphosphinpalladium anstelle von 0,03 Mol% Palladium in Form von Palladium auf Aktivkohle eingesetzt wurde. Nach 4,5 Stunden Reaktionszeit wurden 26 g Destillat mit folgender Zusammensetzung erhalten:
6,5 Gew.-% Methyltrichlorsilan (MeSiCl₃),
74,2 Gew.-% Dimethyldichlorsilan (Me₂SiCl₂),
2,8 Gew.-% Methyldichlorsilan (MeHSiCl₂) und
15,3 Gew.-% Dimethylchlorsilan (Me₂HSiCl).

### Vergleichsversuch 2:

Die Arbeitsweise von Beispiel 1 wurde wiederholt mit der Abänderung, daß 75 g eines Methylchlordisilangemisches bestehend aus 0,8 Gew.-% 1,2-Dimethyltetrachlordisilan,
0,9 Gew.-% 1,1,2-Trimethyltrichlordisilan,
91,2 Gew.-% 1,1,2,2-Tetramethyldichlordisilan,
1,3 Gew.-% 1,1,1,2-Tetramethyldichlordisilan und
1,0 Gew.-% 1,1,1,2,2-Pentamethylchlordisilan
anstelle des Methylchlordisilangemisches aus Beispiel 1 und 0,35 Mol% Palladium (bezogen auf die gesamte Molmenge des eingesetzten Disilangemisches) in Form von 1,5 g Tetrakistriphenylphosphinpalladium anstelle der 0,03 Mol% Palladium in Form von Palladium auf Aktivkohle eingesetzt wurden. Die Mischung wurde unter Rühren auf 143°C erwärmt und Chlorwasserstoff wurde in Mengen von 15 Litern je Stunde in die Mischung eingeleitet. Nach einer Reaktionszeit von 3 Stunden wurden 29 g Destillat mit folgender Zusammensetzung erhalten:
16,2 Gew.-% Trimethylchlorsilan (Me₃SiCl),
50,0 Gew.-% Dimethyldichlorsilan (Me₂SiCl₂),
1,2 Gew.-% Methyldichlorsilan (MeHSiCl₂) und
30,1 Gew.-% Dimethylchlorsilan (Me₂HSiCl).

### Beispiel 2:

Der Versuchsaufbau, wie in Beispiel 1 beschrieben, wurde verwendet, mit der Abänderung, daß der Katalysator, 12 g gekörnte Kohle mit 1,4 Gew.-% Palladium beschichtet, in die Kolonne eingebracht wurde und das Disilangemisch kontinuierlich in den Reaktionskolben dosiert wurde, wobei die Menge an zulaufendem Disilangemisch der Menge an abdestilliertem Monosilangemisch entsprach. Chlorwasserstoff wurde in einer Menge von ca. 78 Litern je Stunde zudosiert. Eingesetzt wurde ein Disilangemisch folgender Zusammensetzung:
35,7 Gew.-% MeCl₂SiSiCl₂Me, 42,6 Gew.-% Me₂ClSiSiCl₂Me, 6,9 Gew.-% Me₂ClSiSiClMe₂, 0,9 Gew.-% Me₃SiSiCl₂Me und 1,4 Gew.-% Me₃SiSiClMe₂ (der Rest besteht hauptsächlich aus Monosilanen und Siloxanen).
Nach 13 Stunden wurde die kontinuierlich durchgeführte Reaktion abgebrochen. Insgesamt wurden 950 g Disilanmischung zugetropft und 980 g Destillat der folgenden Zusammensetzung erhalten:
1 Gew.-% Me₃SiCl, 31 Gew.-% Me₂SiCl₂ und 67 Gew.-% MeSiCl₃. (Me bedeutet jeweils einen Methylrest.)

## Patentansprüche

1. Verfahren zur Herstellung von Methylchlorsilanen durch Umsetzung von Methylchlordisilanen mit Chlorwasserstoff in einer Menge von mindestens 2 Mol je Mol eingesetztes Methylchlordisilan, dadurch gekennzeichnet, daß die Umsetzung in Gegenwart von Platin-, Palladium-, Rhodium- oder Rutherium-Metall als Katalysator durchgeführt wird.

2. Verfahren nach Anspruch 1, dadurch gekennzeichnet, daß das Metall sich auf einem Träger befindet.

3. Verfahren nach Anspruch 1 oder 2, dadurch gekennzeichnet, daß als Metall Palladium verwendet wird.

4. Verfahren nach Anspruch 1, 2 oder 3, dadurch gekennzeichnet, daß als Methylchlorsilane solche der allgemeinen Formel
(CH₃)ₘSiCl₄₋ₘ ,
wobei m eine ganze Zahl von 1 bis 3 bedeutet, erhalten werden.

5. Verfahren nach einem der Ansprüche 1 bis 4, dadurch gekennzeichnet, daß als Methyldisilane solche der allgemeinen Formel
(CH₃)ₙSi₂Cl₆₋ₙ ,
wobei n eine ganze Zahl von 2 bis 6 bedeutet, verwendet werden.

## Claims

1. Process for the preparation of methylchlorosilanes by reaction of methylchlorodisilanes with hydrogen chloride in an amount of at least 2 mol per mole of methylchlorodisilane used, characterized in that the reaction is carried out in the presence of platinum, palladium, rhodium or rutherium [sic] metal as catalyst.

2. Process according to Claim 1, characterized in that the metal is present on a support.

3. Process according to Claim 1 or 2, characterized in that the metal used is palladium.

4. Process according to Claim 1, 2 or 3, characterized in that the methylchlorosilanes obtained are those of the general formula
(CH₃)ₘSiCl₄₋ₘ
in which m is an integer from 1 to 3.

5. Process according to one of Claims 1 to 4, characterized in that the methyldisilanes used are those of the general formula
(CH₃)ₙSi₂Cl₆₋ₙ
in which n is an integer from 2 to 6.

## Revendications

1. Procédé de préparation de méthylchlorosilanes par réaction entre des méthylchlorodisilanes et de l'acide chlorhydrique, en quantité d'au moins deux moles par mole de méthylchlorodisilane introduit, caractérisé en ce que la réaction est effectuée en présence de platine, palladium, rhodium ou ruthénium métal comme catalyseur.

2. Procédé selon la revendication 1, caractérisé en ce que le métal se trouve sur un support.

3. Procédé selon les revendications 1 ou 2, caractérise en ce que le métal utilisé est le palladium.

4. Procédé selon les revendications 1, 2 ou 3, caractérisé en ce que les méthylchlorosilanes obtenus ont pour formule générale :
(CH₃)ₘSiCl₄₋ₘ ,
où m est un entier de 1 à 3.

5. Procédé selon les revendications 1 à 4, caractérisé en ce que les méthyldisilanes utilisés sont ceux de formule générale :
(CH₃)ₙSi₂Cl₆₋ₙ ,
où n est un entier de 2 à 6.
